# EUROPEAN PATENT SPECIFICATION

(11) **EP 2 373 511 B1**
(45) Date of publication and mention of the grant of the patent: **07.03.2018**
(21) Application number: 09830657.4
(22) Date of filing: 24.11.2009
(51) Int. Cl.: B60K 15/03, F02M 37/22

(54) **DEVICE FOR FEEDING FUEL TO AN ENGINE**
VORRICHTUNG ZUR EINSPEISUNG VON KRAFTSTOFF IN EINEN MOTOR
DISPOSITIF POUR ALIMENTER UN MOTEUR EN CARBURANT

(30) Priority: 05.12.2008 SE 0850119
(43) Date of publication of application: 12.10.2011
(73) Proprietor: Scania CV AB, 151 87 Södertälje (SE)
(72) Inventor: FAGERHOF, Henrik, S-828 34 Edsbyn (SE)
(74) Representative: Scania CV AB
(86) International application number: PCT/SE2009/051330
(87) International publication number: WO 2010/064974

(56) References cited:
- EP-A2- 1 028 018
- EP-A2- 1 277 609
- WO-A1-2008/105721
- WO-A1-2008/105721
- DE-A1- 2 440 905
- DE-A1- 10 247 173
- DE-C1- 4 039 032
- FR-A1- 2 707 217
- FR-A1- 2 854 356
- GB-A- 2 410 529
- US-A- 1 191 741
- US-A- 1 191 741
- "RAV4 USES JET PUMP IN DIVIDED FUEL TANK", MACHINE DESIGN, PENTON MEDIA, CLEVELAND, OH, US, vol. 68, no. 4, 22 February 1996 (1996-02-22), page 33, XP000556027, ISSN: 0024-9114

## Description

### Technical field

The invention relates to a device for fuel supply to an engine, according to the preamble of claim 1.

The invention relates also to a vehicle comprising one or more such devices according to claim 11.

### Background

A large proportion of vehicles used for carrying persons and goods are powered by some kind of combustion engine in which fuel in liquid form is converted to necessary motion. The vehicle is therefore provided with one or more fuel tanks to accommodate sufficient fuel for a predetermined period of use of the vehicle.

In course of time, water which precipitates in the tank through condensation due to temperature variations may accumulate in the fuel tank. When the vehicle is stationary, the fact that the density of the water is greater than that of the fuel in the tank will cause the water to accumulate at the bottom of the tank and the fuel to lie on top of the water.

To ensure not only that water is drawn to the engine but also that fuel is led to the engine from the tank, the inlet to the hose which is intended to lead fuel to the engine has to be situated slightly above the tank bottom.

However, this means that the fuel/water situated below the hose inlet cannot be used as fuel for the engine. In large tanks, this volume is considerable, which means that not all of the fuel put into the tank can be used for operating the vehicle. Moreover, using the vehicle causes movements in the fuel/water in the tank which further reduce the possibility of utilising the fuel in the tank when the level comes close to the orifice of the pipe intended to convey fuel to the engine, since the pipe then tends to be above the surface of the fuel/water.

This results in reduced intervals between necessary refuellings and in risk of operational malfunctions, increases the vehicle's total weight, with consequent adverse effects on its fuel consumption, and increases wear both on certain parts of the vehicle and on the running surface on which the vehicle travels.

There is therefore a need for a reliable device which makes it possible for all of the fuel put into the tank to be used for operating the vehicle's engine.

The document GB2410529A relates to a jet pump having a sleeve partially covering an outlet duct, so that fluid flowing through the outlet duct flows back through a space between the sleeve and the outside of the outlet duct. The sleeve may have a lateral opening above the end of the outlet duct to allow fluid to exit. The pump is able to prime itself, which therefore improves startup properties. The pump can be used in a fuel delivery system in a vehicle equipped with a saddle tank, to transfer fuel from the passive to the active side of the tank, even when the fuel level is low.

The document DE2440905A1 relates to a low profile vehicle having its fuel tanks positioned to straddle the exhaust pipes and the transmission, with the two lateral tanks connected by a large diameter pipe. The two tanks are fitted with collecting chambers formed by low depressions under each tank. The fuel intake pipe is positioned in one collecting chamber while a siphon tube connects both collecting chambers, with the tube positioned inside the larger diameter connecting pipe. The other tank has the inlet of the siphon connected to the fuel return pipe from the fuel injection system. The return fuel flow operates a venturi pump to transfer fuel to the other collecting chamber and ensure that the tanks are drained completely.

The document WO2008/105721A1 relates to a fuel tank arrangement, in particular a heavy load vehicle, comprising at least one fuel tank and a fuel line assembly, wherein said fuel line assembly includes at least on fuel supply line for conducting fuel out of said fuel tank and a fuel return line for returning excessive fuel from a combustion engine to said fuel tank arrangement. In order to provide a fuel transfer via the supply line into the fuel tank with low technical effort, said fuel supply line and said fuel return line are connected by a connecting device including a nozzle, such that a fuel flow within said fuel return line is used for drawing fuel out of said fuel tank via said fuel supply line.

The document DE10247173A1 relates to a fuel tank having a suction device with separate suction connection, for independent emptying of the tank via pipes with suction points in chamber base areas. The suction pipes are joint into a common suction connection, and have float valves associated with their suction points. When a chamber has been drained, the valve occupies a shut-off position on the base. The tank incorporates a fuel feed pipe supplied from a fuel feed module. When the module is switched-off, the feed pipe together with the suction branch, form a connection between the suction pipes inside the tank, and the suction connection outside the tank. The document FR2854356A1 relates to a fuel supply apparatus provided with short fuel lines. According to the document, the drive line of suction jet pumps is connected to a pressure line downstream of a fuel supply pump and has at least one check valve or a siphon.

The document EP1277609A2 relates to a fuel tank having an intermediate tank to store fuel from several suction jet pumps. The intermediate tank distributes the fuel to several swirl pots with supply units. This prevents one of the supply units running dry because of transverse acceleration of the fuel tank when the vehicle is cornering.

The document "RAV4 USES JET PUMP IN DIVIDED FUEL TANK", MACHINE DESIGN, PENTON MEDIA, CLEVELAND, OH, US, (19960222), vol. 68, no. 4, ISSN 0024-9114, page 33, XP000556027 relates to a jet pump in a divided fuel tank.

The generic document FR2707217A1 relates to a fuel tank for a vehicle, especially for motor vehicles, having multiple compartments joined together some distance from their bottom comprising a main pumping device which pumps the fuel from one of the compartments and at least one jet pump which takes fuel from another compartment to pour it into the compartment provided with the main pumping device. The jet pump placed inside the tank is borne by a base welded onto the base of this tank, and the fuel pipe supplying the jet pump is routed around the outside of the tank and passes through it at its bottom.

The document US1191741A relates to a strainer comprising a strainer proper, a ring, a plate on the latter forming the bottom thereof, the strainer proper rising from the plate within the ring, a discharge pipe in the plate adapted to enter the strainer proper, the ring having on its side an outturned flange on which a supply tank is seated and to which its bottom is secured around the ring.

The document EP1028018A2 relates to a reservoir pot for a vehicle fuel tank has a base and a cylindrical side wall which provides a reserve volume of liquid fuel. A jet pump draws fuel though an inlet port from an inlet chamber to replenish the reserve volume. The inlet chamber is bounded below by a baffle plate and on one side by an inlet aperture which faces towards the front of the vehicle. A weir formed on the baffle plate partially obstructs the inlet aperture and this helps to prevent the loss of fuel droplets when the vehicle is in a nose-down attitude when the inlet aperture is above the normal fuel level in the tank.

### Summary of the invention

The object of the present invention is to eliminate the above problems. The object is achieved by a device for supply of fuel/water to an engine according to the independent claim.

The problems described above are solved by fuel/water being first drawn from the fuel tank to an ancillary space before being conveyed to the engine for combustion. The amount conveyed from the fuel tank to the ancillary space will always be more than is consumed by the engine, so the fuel/water level in the ancillary space is maintained at a level such that the supply to the engine is assured. The fact that the fuel for the engine is taken from the ancillary space means that the hose which supplies the ancillary space may lead into the bottom of the fuel tank without any possible accumulation of water in the bottom of the tank causing problems for the operation of the engine, since there will, during the transfer to the ancillary space and in the ancillary space, be such rapid mixing of fuel and the water that the water content will not cause any problems when the mixture is led to the engine. Connecting the hose to the ancillary space at or near to the lowest point of the tank makes it possible for the fuel tank to be emptied completely and for all of the fuel to be used for the vehicle, thereby reducing the weight of the vehicle.

In an embodiment of the invention, the bottom of the fuel tank has one or more sloping surfaces for guiding the contents towards an outlet to which the pipe to the ancillary space is connected and which is situated at or near to the lowest point of the fuel tank. This embodiment of the invention provides reliable fuel supply to the ancillary space in that the contents of the fuel tank are directed to the outlet of the tank. Fuel tanks are usually provided with a bottom plug for cleaning and emptying of water from the tank. This bottom plug is situated at or near to the lowest point of the tank and may therefore be used with advantage for connecting the hose to the ancillary space via a plug, nipple or the like to which the hose may be connected.

The ancillary space may be situated in the tank, in which case it will be partly separated from the fuel tank by a wall or the like. This version entails few further components, since the walls of the existing tank are used to delineate the ancillary space.

The ancillary space may alternatively be situated outside the tank and take the form of a separate tank, which may be advantageous if the available space is limited and/or if it is not desirable to reduce the volume of the tank. The ancillary space may accordingly be situated at a suitable location separate from the fuel tank.

In an embodiment of the invention, the line intended to supply fuel/water to the ancillary space draws fuel/water via a venturi pipe. This version provides an operationally reliable solution in that the venturi pipe comprises no movable parts which would require maintenance or might disintegrate. According to another embodiment of the invention, a pump may be used for the line which is intended to supply fuel/water to the ancillary space. This alternative version may be advantageous if insufficient supply of fuel to the ancillary space is provided by the venturi pipe, since the pump can be dimensioned on the basis of the engine's expected fuel requirement.

According to the invention, a filter unit is provided at the connection of the line to the fuel tank in order to filter fuel/water before it is transferred to the ancillary space. This embodiment prevents any contaminants such as litter or undesirable particles in the tank from being transferred to the ancillary space and reaching the engine, in which they might cause operational malfunctions and, in the worst case, breakdowns.

According to the invention, the filter unit is so configured that in an undeployed state it can be inserted through the aperture in the bottom of the fuel tank and thereafter be deployed so that its edge which faces towards the tank's inside wall at the aperture then has a diameter larger than diameter of the aperture. This filter solution results in a filter with a considerably larger filter area than would be provided by a conventional filter small enough to be insertable through the aperture in the bottom of the tank. The larger filter area increases reliability considerably in that the risk of the filter, and hence the fuel supply to the ancillary space, becoming obstructed is markedly reduced.
According to an embodiment of the invention, the filter unit is stretched towards the inside wall of the tank to prevent fuel/water from making its way in between the edge of the filter and the inside wall of the tank. This embodiment improves the filter action in that fuel is prevented from passing unfiltered from the fuel tank to the ancillary space.
According to an embodiment of the invention, the filter unit in a deployed state takes substantially the form of a cone or pyramid with its base surface so placed that it surrounds the aperture in the bottom of the tank.

### Brief description of the drawings

The invention is explained in more detail below with reference to the drawings, in which:
- Figure 1: depicts schematically a device for supply of fuel to an engine according to an embodiment of the invention.
- Figure 2: depicts a schematic configuration of a venturi pipe.
- Figure 3: depicts a filter unit in schematic cross-section with the filter in the undeployed state.
- Figure 4: depicts a filter unit in schematic cross-section with the filter in the deployed state.

### Detailed description of the invention

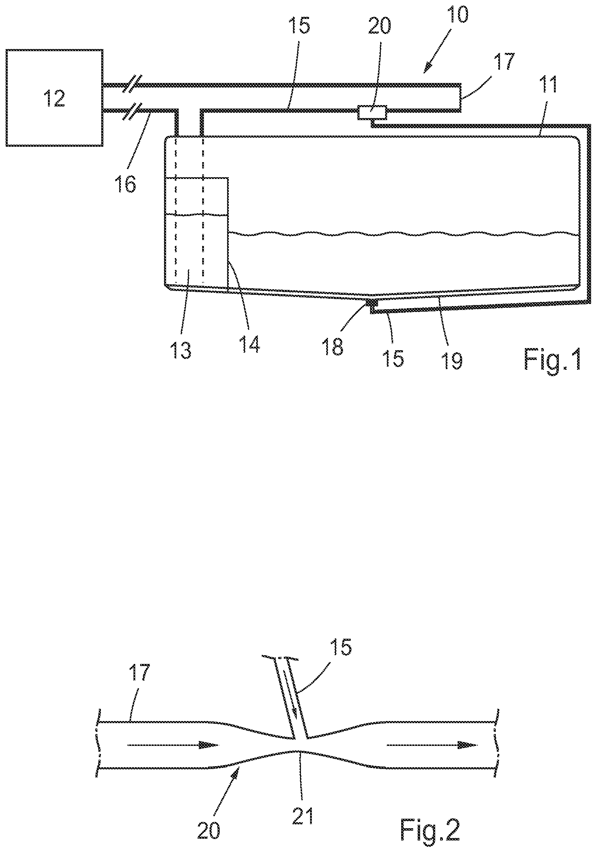

Figure 1 depicts an embodiment of a device 10 for supply of fuel from a fuel tank 11 to an engine 12 according to the invention defined in the claims. In one corner of the fuel tank, an ancillary space 13 is delineated by separation by a wall 14 to create an ancillary space of a desired size. Refuelling puts fuel into the fuel tank.

When the engine 12 is in operation, a first line 15 supplies fuel/water from the fuel tank 11 to the ancillary space 13. Fuel/water is thereafter led from the ancillary space 13 to the engine 12 via a second line 16. The amount of fuel/water supplied to the engine will always be greater than the engine's consumption, so the surplus fuel, together with water which is separated from the fuel/water mixture before the fuel is supplied to the engine, is led back from the engine to the ancillary space via a line 17.

The first line 15 which effects the transfer of fuel/water from the fuel tank to the ancillary space is connected to the fuel tank via an aperture 18 situated in the bottom of the fuel tank. The aperture is preferably situated at the same level as the tank bottom 19 so that all of the fuel in the tank can pass out through the aperture 18. Fuel tanks are usually provided with a bottom plug for removal of accumulated litter in the fuel tank and draining off of any water in the fuel tank, and the already existing aperture for the bottom plug is used with advantage for connecting the line. Connecting the line for transfer of fuel/water to the ancillary space in the bottom of the fuel tank makes it possible to completely empty the fuel tank and hence utilise all of the fuel put into the tank, thereby lengthening the interval between refuellings of the vehicle.

To further direct the contents of the fuel tank to the outlet 18 in the tank bottom 19, the tank bottom may be provided with one or more surfaces sloping towards the outlet in order to cause all of the fuel in the tank to transfer to the ancillary space. The outlet will then normally be situated at or near to the lowest point of the fuel tank.

The amount of fuel/water transferred from the fuel tank to the ancillary space will always be greater than the engine's consumption, so the fuel/water level in the ancillary space will always be higher than level in the fuel tank, thereby ensuring reliable supply of fuel from the ancillary space to the engine. The fuel is drawn from the lower portion of the ancillary space, thereby ensuring that the inlet to the line will always be below the fuel level in the ancillary space even if the ancillary space is not completely full of fuel. In the embodiment of the invention illustrated in Figure 1, the ancillary space is open at the upper edge to the fuel tank so that when the ancillary space is full any surplus fuel/water will drain back to the fuel tank by flowing over the edge of the wall 14.

When the vehicle is parked and the engine and its associated systems are switched off, the fuel/water level will drop until the respective surface levels in the fuel tank and the ancillary space are equalised by siphon action via the connecting first line 15.

The ancillary space constitutes only a small portion of the fuel tank. How large a portion of the tank the ancillary space should constitute depends on the expected fuel requirement for the engine and the volume available for tanks.

The ancillary space may alternatively take the form of a completely separate unit outside the fuel tank, which may be advantageous if the available space is limited. The ancillary space will then have to be provided with some kind of drain to return fuel/water to the fuel tank when the ancillary space is full.

The fuel may be transferred from the fuel tank to the ancillary space via a venturi pipe 20 situated at an appropriate location along the line 17 by which return fuel from the engine is conveyed back to the ancillary space. The principle of a venturi pipe 20 is illustrated in Figure 2. The venturi pipe 20 comprises a section 21 with reduced cross-section which causes the velocity of the return fuel, which in this case flows through the pipe, to increase. The increased flow velocity causes negative pressure and hence suction in a hose connected to the constriction 21. The hose connected to the constriction is in this case the hose 15 for transferring fuel/water from the fuel tank to the ancillary space, so fuel/water is sucked through the hose and joins the return fuel in the line 17 from the engine which leads into the ancillary space. This embodiment of the invention is very reliable in that it comprises no movable parts. Fuel may nevertheless also be transferred from the fuel tank to the ancillary space by a suitable pump unit.

When the engine is switched off and a large amount of water has accumulated in the fuel tank, the line 15 connected to the lowest point of the tank 11 may also be disconnected for emptying of the contents of the tank 11. This may be appropriate when the vehicle has been in operation for a lengthy period and is being serviced.

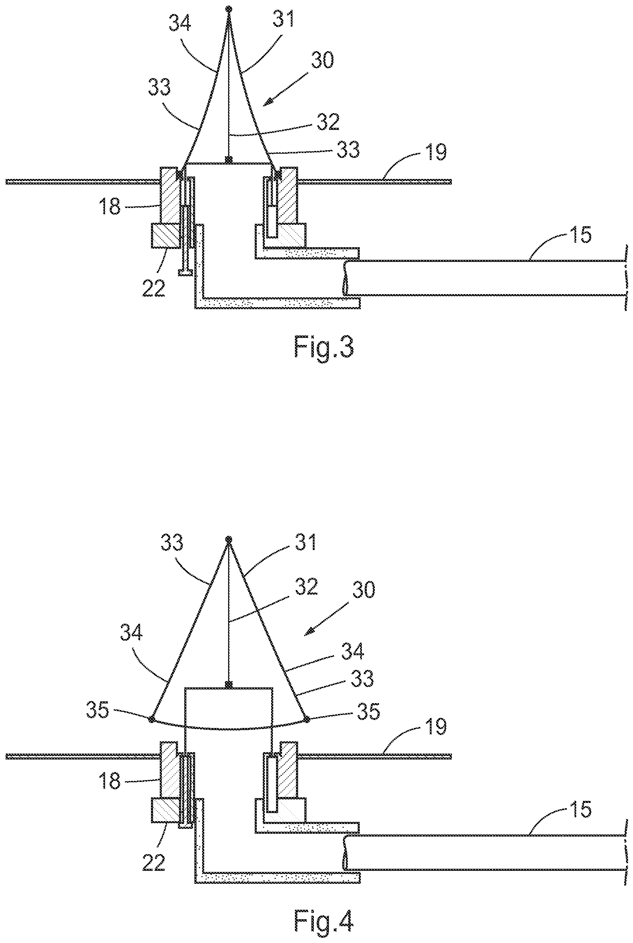

For further assurance of high reliability of the device, it is advantageous to provide a filter unit 30, illustrated in Figures 3 and 4, at the outlet 18 of the fuel tank 11 in order to prevent particles and any contaminants from being transferred to the ancillary space 13 and reaching the engine 12. If complete emptying of the fuel tank 11 is to be achieved, however, the connection of the hose 15 and the filter of the filter unit have to be level with the tank bottom 19, which means that the cross-sectional area of the filter will only be as large as is allowed by the diameter of the outlet. If the fuel tank's existing bottom plug is to be used, its diameter will be up to about 20 mm, which results in an extremely limited filter cross-section being allowed in this aperture and ultimately entails great risk of the filter, after a period of use, becoming obstructed and reducing or, in the worst case, blocking the flow to the ancillary space.

To reduce this risk, a new type of filter unit 30 has been developed. This filter unit comprises a collapsible filter 31 which in an undeployed state can be inserted through the aperture before being deployed in the tank, resulting in a filter with a filter cross-section which is considerably larger than the maximum filter cross-section allowed in the tank bottom aperture.

The niter unit comprises a longitudinal stem 32 and at least tnree supporting limbs 33 fastened to the forward end of the longitudinal stem 32. The supporting limbs 33 are clad with a filter material 34 shaped to correspond to the desired filter shape and the filter surface.

At the fastening to the stem 32, the supporting limbs 33 are so articulated that they can be retracted to a substantially parallel position along the longitudinal stem 32, in the same way as an umbrella, so that their radius measured from the longitudinal stem 32 is reduced and allows the unit to be inserted through a narrow aperture. When the whole of the supporting limbs 33 have passed through the aperture and are in the tank, the supporting limbs are deployed so that the radius at their rear end becomes larger than radius of the aperture. This can either be done by the supporting limbs being resiliently fastened to the longitudinal stem, which means that as soon as they have passed they are deployed so that the filter material is extended, or else a stretching-out device is provided close to the longitudinal stem.

The longitudinal stem 32 is thereafter pulled back, in the opposite direction to the direction of insertion, so that the surrounding filter material 34 is stretched and the ends 35 of the supporting limbs 33 bear against the inside of the tank in the region round the aperture 18. The supporting limbs 33 and the filter being stretched back towards the inside of the tank fixes the filter in a deployed state round the aperture.

The filter preferably takes the form of a cone or pyramid whose base area is considerably larger than the aperture in the tank bottom. The shape of the filter will be determined largely by the number of supporting limbs in that more supporting limbs will result in a more conical shape and circular bottom surface. Alternatively, the supporting limbs may have different lengths, which in combination with a chosen filter shape may result in an asymmetrically shaped filter which can be placed in position in cases where the space in the tank in certain directions is limited.

With this filter it is possible to have a very large filter cross-section even if the insertion aperture is very small, since the length of the supporting limbs and the degree to which they are allowed to protrude in a deployed state do not depend on the size of the aperture.

The filter material has to extend right down to the end of the supporting limbs so that there is no clearance relative to the inside of the tank, and be so configured that even between the supporting limbs the filter material comes into contact with the inside of the tank.

The device for stretching the filter against the inside of the tank and hence preventing leakage between the edge of the filter and the inside of the tank is either directly connected to the longitudinal stem, and may then form part of a spring device which acts in the extension of the longitudinal stem, or it may be accommodated in the connection 22 at the aperture 18 of the tank 11 in the same way as a sleeve round the periphery of the connection or the like.

This filter may with advantage be used in other applications where similar problems arise. The filter is described above on the basis of a conical or pyramid shape but other shapes may also be used so long as they result in a filter which is collapsible and deployable.

Although described above on the basis of some exemplifying embodiments, the invention is not limited to them but is defined on the basis of the accompanying claims.

## Claims

1. A device for supply of fuel/water to an engine (12), which comprises:
- a fuel tank (11) and an ancillary space (13) intended to contain fuel/water,
- a first line (15) intended to supply fuel/water to the ancillary space (13)
from the tank (11), and
- a second line (16) intended to supply fuel/water to the engine from the ancillary space,
wherein the first line (15) intended to supply fuel/water to the ancillary space (13) is connected to the fuel tank (11) at a point at or near to the lowest point of the fuel tank, wherein the device comprises a filter unit (30) provided at the connection of the first line (15) to the fuel tank (11) in order to filter the fuel/water before it is transferred to the ancillary space (13) **characterised in that** the filter unit (30) is so configured that in an undeployed state it can be inserted through an aperture (18) in the fuel tank's bottom (19) in order thereafter to be deployed so that its side which faces towards the tank's inside wall at the aperture (18) will then have a larger diameter than the diameter of the aperture (18).

2. A device according to claim 1, **characterised in that** the bottom (19) of the fuel tank (11) has one or more sloping surfaces for guiding the contents towards an outlet (18) to which the first line (15) is connected and which is situated at or near to the lowest point of the fuel tank (11).

3. A device according to claim 1 or 2, **characterised in that** the ancillary space (13) is situated in the fuel tank (11) and is separated from the fuel tank (11) by a wall (14) or the like.

4. A device according to claim 1 or 2, **characterised in that** the ancillary space takes the form of a separate unit situated outside the fuel tank.

5. A device according to any one of the foregoing claims, **characterised in that** the first line (15) intended to supply fuel/water to the ancillary space (13) draws fuel/water via a venturi pipe (20).

6. A device according to any one of the foregoing claims, **characterised in that** the first line (15) intended to supply fuel/water to the ancillary space (13) draws fuel/water by means of a pump unit.

7. A device according to any one of the foregoing claims, **characterised in that** the filter unit (30) is stretched against the inside wall of the tank prevent fuel/water from making its way in between the edge of the filter and the inside wall of the tank.

8. A device according to any one of the foregoing claims, **characterised in that** the filter unit in an undeployed state takes substantially the form of a cone or pyramid whose base surface is so positioned that it surrounds the aperture (18) in the tank bottom (19).

9. A vehicle comprising one or more devices according to any one of claims 1 to 8.

## Patentansprüche

1. Vorrichtung zur Zufuhr von Kraftstoff/Wasser zu einem Verbrennungsmotor (12), der aufweist
- einen Kraftstofftank (11) und einen Zusatzraum (13), der zur Aufnahme von Kraftstoff/Wasser vorgesehen ist,
- eine erste Leitung (15) zur Zufuhr von Kraftstoff/Wasser vom Tank (11) zum Zusatzraum (13), und
- eine zweite Leitung (16) zur Zufuhr von Kraftstoff/Wasser vom Zusatzraum (13) zum Verbrennungsmotor,
wobei die erste Leitung (15) zur Zufuhr von Kraftstoff/Wasser vom Tank (11) zum Zusatzraum (13) mit dem Kraftstofftank (11) an einem Punkt an der oder nahe der tiefsten Stelle des Kraftstofftanks verbunden ist, wobei die Vorrichtung eine Filtereinheit (30) an der Verbindung der ersten Leitung (15) mit dem Kraftstofftank (11) aufweist, um den Kraftstoff/das Wasser zu filtern, bevor es dem Zusatzraum (13) zugeführt wird,
**dadurch gekennzeichnet, dass** die Filtereinheit (30) so konfiguriert ist, dass sie im nicht entfalteten Zustand durch eine Öffnung (18) im Boden des Kraftstofftanks gesteckt werden kann, um danach so entfaltet zu werden, dass dann die zur Innenwand des Tanks weisenden Seite an der Öffnung (18) einen größeren Durchmesser hat als die Öffnung (18).

2. Vorrichtung nach Anspruch 1, **dadurch gekennzeichnet, dass** der Boden (19) des Kraftstofftanks (11) eine oder mehrere geneigte Oberflächen hat, um den Inhalt zu einem Auslass (18) zu leiten, mit dem die erste Leitung (15) verbunden ist und der sich am oder nahe dem tiefsten Punkt des Kraftstofftanks (11) befindet.

3. Vorrichtung nach Anspruch 1 oder 2, **dadurch gekennzeichnet, dass** sich der Zusatzraum (13) im Kraftstofftank (11) befindet und vom Kraftstofftank (11) durch eine Wand (14) oder dgl. getrennt ist.

4. Vorrichtung nach einem der Ansprüche 1 oder 2, **dadurch gekennzeichnet, dass** der Zusatzraum (13) die Gestalt einer getrennten Einheit hat, die sich außerhalb des Kraftstofftanks befindet.

5. Vorrichtung nach einem der vorigen Ansprüche, **dadurch gekennzeichnet, dass** die erste Leitung (15) zur Zufuhr von Kraftstoff/Wasser zum Zusatzraum (13) Kraftstoff/Wasser über ein Venturi-Rohr (20) ansaugt.

6. Vorrichtung nach einem der vorigen Ansprüche, **dadurch gekennzeichnet, dass** die erste Leitung (15) zur Zufuhr von Kraftstoff/Wasser zum Zusatzraum (13) Kraftstoff/Wasser mittels einer Pumpeneinheit zuführt.

7. Vorrichtung nach einem der vorigen Ansprüche, **dadurch gekennzeichnet, dass** die Filtereinheit (30) gegen die Innenwand des Tanks gedehnt wird, um zu verhindern, dass Kraftstoff/Wasser zwischen den Rand des Filters und die Innenwand des Tanks eindringt.

8. Vorrichtung nach einem der vorigen Ansprüche, **dadurch gekennzeichnet, dass** die Filtereinheit (30) im nicht entfalteten Zustand im Wesentlichen die Form eines Kegels oder eine Pyramide annimmt, dessen bzw. deren Grundfläche so positioniert ist, dass sie die Öffnung (18) im Tankboden (19) umgibt.

9. Kraftfahrzeug mit einer oder mehreren Vorrichtungen nach einem der Ansprüche 1 bis 8.

## Revendications

1. Dispositif pour alimenter en carburant/eau un moteur (12), qui comprend :
- un réservoir de carburant (11) et un espace auxiliaire (13) destiné à contenir du carburant/eau,
- une première ligne (15) destinée à alimenter en carburant/eau l'espace auxiliaire (13) à partir du réservoir (11), et
- une seconde ligne (16) destinée à alimenter en carburant/eau le moteur à partir de l'espace auxiliaire,
dans lequel la première ligne (15) destinée à alimenter en carburant/eau l'espace auxiliaire (13) est connectée au réservoir de carburant (11) en un point situé au niveau ou à proximité du point le plus bas du réservoir de carburant, le dispositif comprenant une unité de filtre (30) agencée au niveau de la connexion de la première ligne (15) au réservoir de carburant (11) pour filtrer le carburant/eau avant son transfert dans l'espace auxiliaire (13) **caractérisé en ce que** l'unité de filtre (30) est configurée de telle sorte que, dans un état non déployé, elle peut être insérée à travers une ouverture (18) dans le fond (19) du réservoir de carburant pour ensuite être déployée de sorte que son côté qui fait face à la paroi interne du réservoir au niveau de l'ouverture (18) va alors avoir un diamètre plus grand que le diamètre de l'ouverture (18).

2. Dispositif selon la revendication 1, **caractérisé en ce que** le fond (19) du réservoir de carburant (11) présente une ou plusieurs surfaces inclinées pour guider le contenu vers une sortie (18) à laquelle la première ligne (15) est connectée et qui est située au niveau ou à proximité du point le plus bas du réservoir de carburant (11).

3. Dispositif selon la revendication 1 ou 2, **caractérisé en ce que** l'espace auxiliaire (13) est situé dans le réservoir de carburant (11) et est séparé du réservoir de carburant (11) par une paroi (14) ou analogue.

4. Dispositif selon la revendication 1 ou 2, **caractérisé en ce que** l'espace auxiliaire prend la forme d'une unité séparée située à l'extérieur du réservoir de carburant.

5. Dispositif selon l'une quelconque des revendications précédentes, **caractérisé en ce que** la première ligne (15) destinée à alimenter en carburant/eau l'espace auxiliaire (13) aspire du carburant/eau via une conduite de venturi (20).

6. Dispositif selon l'une quelconque des revendications précédentes, **caractérisé en ce que** la première ligne (15) destinée à alimenter en carburant/eau l'espace auxiliaire (13) aspire du carburant/eau au moyen d'une unité de pompe.

7. Dispositif selon l'une quelconque des revendications précédentes, **caractérisé en ce que** l'unité de filtre (30) est étirée contre la paroi interne du réservoir empêchant que du carburant/eau ne passe entre le bord du filtre et la paroi interne du réservoir.

8. Dispositif selon l'une quelconque des revendications précédentes, **caractérisé en ce que** l'unité de filtre dans un état non déployé prend sensiblement la forme d'un cône ou d'une pyramide dont la base est positionnée de sorte qu'elle entoure l'ouverture (18) dans le fond de réservoir (19).

9. Véhicule comprenant un ou plusieurs dispositifs selon l'une quelconque des revendications 1 à 8.
